# DEMANDE DE BREVET EUROPEEN

(11) **EP 4 576 460 A1**
(43) Date de publication de la demande: **25.06.2025**
(21) Numéro de dépôt: 24220072.3
(22) Date de dépôt: 16.12.2024
(51) Int. Cl.: H02G 1/10, H02G 9/12

(54) **DISPOSITIF DE GUIDAGE FLOTTANT**

(30) Priorité: 21.12.2023 FR 2314731
(71) Demandeur: EIFFAGE GENIE CIVIL, 78140 VELIZY VILLACOUBLAY (FR)
(72) Inventeur: BOUET, Nicolas, 78140 VELIZY VILLACOUBLAY (FR); BERAS, Alexandre, 78140 VELIZY VILLACOUBLAY (FR); CEYZERIAT, Jérémy, 78140 VELIZY VILLACOUBLAY (FR); CHARPENAY, Romain, 78140 VELIZY VILLACOUBLAY (FR)
(74) Mandataire: Plasseraud IP

(57) **Abrégé**

Dispositif de guidage flottant (1), configuré pour être ancré sur un fond en milieu aquatique (F) et pour guider et retenir, avant son atterrage, un câble électrique (C) muni de bouées de flottaison (8), le dispositif de guidage flottant (1) comportant :
i. une structure métallique (2) comportant deux demi-structures (3) d'une hauteur (h) au moins égale à une hauteur prédéterminée, et une structure de liaison (4) reliant les deux demi-structures (3, 3a, 3b),
ii. une zone de guidage (5) du câble électrique (C) formant un espace comportant deux ouvertures (6) opposées pour le passage du câble électrique (C), ledit espace étant délimité latéralement par les deux demi-structures (3, 3a, ; 3b),
iii. au moins deux flotteurs (7) configurés pour assurer la flottaison du dispositif de guidage flottant (1),
iv. au moins un point d'amarrage (8) fixé à la structure métallique (2), configuré pour permettre de fixer au moins une ligne de mouillage (22), cette dernière étant prévue pour être reliée à un ancrage (23) sur le fond en milieu aquatique (F).

## Description

### Domaine technique

La présente divulgation relève du domaine de l'installation de câbles électriques sur des fonds en milieu aquatique, notamment des fonds marins, et dans les zones côtières. En particulier, elle propose un dispositif de guidage flottant configuré pour être ancré sur un fond en milieu aquatique et pour guider et retenir, avant son atterrage, un câble électrique muni de bouées de flottaison, ainsi qu'une installation comportant une pluralité de tels dispositifs de guidage flottants et un procédé de guidage d'un câble électrique pour un maintien du câble électrique sur sa trajectoire en phase provisoire de chantier, notamment un câble électrique destiné à être déposé sur un fond en milieu aquatique entre un bateau câblier, ou une station offshore, et la terre, mettant en oeuvre une telle installation.

### Technique antérieure

Pour assurer le raccordement électrique d'une station de production d'électricité offshore, par exemple d'une ou plusieurs éoliennes en mer, au réseau électrique terrestre, ou pour l'interconnexion électrique de tout câble électrique sous-marin, il est nécessaire d'installer un câble électrique, ou câble de puissance, sur le fond en milieu aquatique pour relier la station offshore au réseau. Lors de l'installation du câble électrique, il est connu de mobiliser des bateaux pour assurer le guidage du câble que l'on déploie depuis la station offshore ou un bateau câblier jusqu'à la terre, selon un rayon de courbure adéquat quels que soient les efforts environnementaux tels que les courants, le vent, le marnage, etc., et ce jusqu'au positionnement du câble électrique sur le fond en milieu aquatique. Une telle opération mobilise un matériel coûteux et un grand nombre de personnes sur une durée assez longue et nécessite des conditions climatiques et de marnage bien spécifiques.

Le problème est amplifié dans une zone en bordure de côte, s'étendant entre la terre et jusqu'à une distance de la terre avec une hauteur d'eau suffisante pour la circulation de bateaux quelle que soit la marée. Une telle distance est par exemple comprise entre 800 m et 3 km, voire entre 800 m et 1 km depuis la côte. Dans cette zone, le niveau d'eau peut être très faible voire nul à marée basse et être significatif à marée haute, ce qui complique l'intervention d'embarcations sur la durée d'installation qui couvre au moins tout ou partie d'un changement de marée. Or, les courants liés au changement de marées pouvant être forts dans de telles zones, il est nécessaire, pour maintenir le câble électrique avec le rayon de courbure adéquat, d'avoir des embarcations de dimensions significatives et avec une motorisation importante, ces bateaux ayant donc un tirant d'eau pouvant être non compatible avec la marée basse et/ou ces bateaux sont un matériel coûteux à mobiliser, notamment en termes de bilan carbone.

Ainsi, on comprend qu'il est complexe et coûteux de prévoir l'installation d'un câble électrique sur un fond en milieu aquatique pour le relier depuis une station offshore ou un bateau câblier jusqu'à la terre.

### Résumé

La présente divulgation vient améliorer la situation.

Il est proposé un dispositif de guidage flottant, configuré pour être ancré sur un fond en milieu aquatique et pour guider et retenir, avant son atterrage, un câble électrique muni de bouées de flottaison, le dispositif de guidage flottant comportant :
- une structure métallique comportant deux demi-structures d'une hauteur au moins égale à une hauteur prédéterminée, et une structure de liaison reliant les deux demi-structures,
- une zone de guidage du câble électrique formant un espace comportant deux ouvertures opposées pour le passage du câble électrique, ledit espace étant délimité latéralement par les deux demi-structures,
- au moins deux flotteurs configurés pour assurer la flottaison du dispositif de guidage flottant,
- au moins un point d'amarrage fixé à la structure métallique, configuré pour permettre de fixer au moins une ligne de mouillage, cette dernière étant prévue pour être reliée à un ancrage sur le fond en milieu aquatique.

Un tel dispositif de guidage flottant permet de limiter la mobilisation d'une grande quantité de bateaux pendant une opération d'atterrage d'un câble électrique depuis une station offshore de production d'électricité ou un bateau câblier jusqu'à la côte. En effet, le dispositif de guidage flottant sert de point de guidage pour le câble lors de l'opération, à la place des bateaux. Le fait qu'il soit prévu pour être ancré empêche qu'il soit déporté à cause de courants marins ou du vent ou autre facteur, même s'il est ancré avec une relative mobilité, notamment de son orientation, en fonction de ces facteurs. Il peut ainsi constituer un point de passage fiable pour le guidage et la retenue du câble électrique pendant toute la durée nécessaire.

L'utilisation réduite de bateaux lors de l'opération permet de réduire fortement les émissions de dioxyde de carbone dans l'atmosphère pendant une telle opération.

De plus, on augmente le niveau de sécurité car il y a moins de facteurs de risques humains.

Par ailleurs, la hauteur prédéterminée, notamment la hauteur du dispositif de guidage flottant qui peut être sensiblement égale à celle des demi-structures, est avantageusement prévue pour être suffisante de manière à empêcher le câble électrique de sortir de la zone de guidage, notamment par le bas. En particulier, cette hauteur prédéterminée peut être prévue de manière à ce que, si la hauteur d'eau est réduite voire nulle, notamment à marée basse, le dispositif de guidage flottant se pose sur le sol avant le câble électrique, assurant ainsi toujours le guidage de celui-ci dans la zone de guidage et évitant un écrasement du câble sous le dispositif de guidage. De même, la hauteur prédéterminée peut être prévue pour, lorsque le niveau d'eau remontera, le câble électrique muni des bouées se mette à flotter avant le dispositif de guidage flottant de manière à assurer son guidage et sa retenue dans la zone de guidage.

Une telle hauteur prédéterminée peut être comprise entre 0,5m et 3m, notamment entre 1m et 2,5 m.

Les caractéristiques exposées dans les paragraphes suivants peuvent, optionnellement, être mises en oeuvre, indépendamment les unes des autres ou en combinaison les unes avec les autres :

Les deux demi-structures peuvent être similaires, notamment identiques. Elles peuvent être disposées symétriquement autour de la zone de guidage, notamment par rapport à un plan vertical médian de la zone de guidage.

Chaque demi-structure présente par exemple une forme de demi-lune comportant une partie incurvée configurée pour délimiter latéralement l'espace de la zone de guidage. Une telle forme peut permettre de faciliter la mise en place du câble électrique dans la zone de guidage. Une telle forme peut permettre de guider le câble électrique dans la zone de guidage tout en s'adaptant à une éventuelle variation du rayon de courbure du câble électrique liée aux facteurs environnementaux tels que le courant. Une telle forme peut permettre de limiter la courbure du câble à la courbure de la demi-lune sous les facteurs environnementaux, cette caractéristique dimensionnelle de courbure étant pilotée par la résistance du câble.

Chaque demi-structure peut présenter une symétrie par rapport à un plan vertical transversal médian, notamment perpendiculaire au plan vertical médian de la zone de guidage.

La structure de liaison comporte de préférence au moins une barre transversale reliant les deux demi-structures, notamment dans une partie supérieure de celles-ci, étant disposée par exemple au-dessus de celles-ci. La structure de liaison peut délimiter supérieurement la zone de guidage.

La zone de guidage peut être uniquement délimitée latéralement par les demi-structures et supérieurement par la barre transversale. La zone de guidage peut ne pas être délimitée inférieurement.

Le dispositif de guidage flottant peut comporter, pour chaque flotteur, un support de flotteur fixé à la structure métallique, notamment à la structure de liaison, de telle sorte que chaque flotteur s'étende dans un espace intérieur de chaque demi-structure.

Les flotteurs peuvent être réalisés en matière polymère telle qu'une mousse de polyuréthane, ou tout autre matériau permettant la flottaison.

La zone de guidage est de préférence configurée de telle sorte que le câble électrique s'étendant sensiblement selon un axe longitudinal puisse être guidé au moins partiellement selon un axe transversal perpendiculaire à l'axe longitudinal et selon un axe vertical.

La structure de liaison peut être fixée de manière amovible, notamment par fixation mécanique, tel que le boulonnage, aux demi-structures, notamment afin de faciliter le transport. En effet, lorsque les demi-structures ne sont pas reliées entre elles, elles peuvent être superposées et le volume de la structure métallique à transporter est alors considérablement réduit.

Le dispositif de guidage flottant peut comporter un système d'accès pour un personnel comportant au moins l'un parmi : une passerelle, une échelle, un garde-corps, un caillebotis, un accès à partir d'un bateau, une prise de main et une corde.

Le dispositif de guidage flottant peut comporter un accessoire facilitateur de passage de câble, comportant un maillage de barres métalliques fixé sur des parties des demi-structures qui délimitent la zone de guidage.

Un tel accessoire facilitateur de passage de câble peut encore comporter un maillage de barres métalliques fixé sur une partie de la ou des barres transversales de la structure de liaison qui borde supérieurement la zone de guidage et fait face à celle-ci. Un tel accessoire facilitateur peut être réalisé dans un matériau à faible coefficient de frottement ou comporter un système de roulement, notamment vertical.

L'accessoire facilitateur de passage de câble peut permettre de faciliter le coulissement du câble électrique au sein de la zone de guidage lors de sa mise en place et tout au long de la durée de guidage nécessaire. L'accessoire facilitateur de passage de câble peut permettre d'éviter d'arracher les bouées de flottaison auxquelles est relié le câble électrique à intervalles notamment réguliers.

Selon un autre aspect, en combinaison avec ce qui précède, il est proposé une installation de guidage d'un câble électrique muni de bouées de flottaison avant son atterrage, comportant :
- une pluralité de dispositifs de guidage flottants tels que définis plus haut, disposés, notamment à distance prédéterminée deux à deux, de telle sorte que les ouvertures des zones de guidage permettent le passage du câble électrique dans toutes les zones de guidage,
- au moins une ligne de mouillage et un ancrage de fond en milieu aquatique pour chaque dispositif de guidage flottant, notamment au moins deux lignes de mouillage reliées chacune à un ancrage.

Le nombre de dispositifs de guidage flottants peut être compris entre deux et quinze, notamment entre deux et dix, par exemple entre cinq et six. Ce nombre peut néanmoins varier en fonction du projet et de ses paramètres.

La distance entre deux dispositifs de guidage peut dans certains exemples être comprise entre 50 m et 200 m, par exemple entre 90 m et 110 m. Cependant, une telle distance dépend du projet et de ses paramètres, à tel point qu'il est envisageable dans d'autres exemples que cette distance entre deux dispositifs de guidage soit inférieure à 50 m, voire à 20 m, voire soit proche de 0 m.

Selon un autre aspect, en combinaison avec ce qui précède, il est proposé un procédé de guidage d'un câble électrique pour un maintien du câble électrique sur sa trajectoire en phase provisoire de chantier, notamment un câble électrique destiné à être déposé sur un fond en milieu aquatique entre un bateau câblier, ou une station offshore, et la terre mettant en oeuvre une telle installation ainsi qu'un treuil disposé sur la terre, le procédé comportant :
a. la mise en place de ladite pluralité de dispositifs de guidage flottant sur l'eau et l'ancrage de chaque dispositif de guidage flottant, à l'aide de ladite au moins une ligne de mouillage et dudit ancrage,
b. le déroulement d'un câble de travail depuis le treuil,
c. le passage du câble de travail dans les zones de guidage des dispositifs de guidage flottants successifs puis
d. l'accrochage du câble de travail au câble électrique porté par le bateau câblier, ou la station offshore, le câble électrique étant muni de bouées de flottaison,
e. l'enroulement sur le treuil du câble de travail de manière à déployer le câble électrique dans l'eau en le faisant passer par les zones de guidage,
f. éventuellement l'enlèvement des bouées de flottaison du câble électrique de manière à le déposer sur le fond en milieu aquatique.

Une telle installation et le procédé de guidage permettent d'éviter de mobiliser des bateaux spécifiques et une grande quantité de personnes pour une telle opération. En effet, il n'est plus nécessaire d'avoir des bateaux guidant, pendant toute la durée de l'opération, le câble électrique puisque les dispositifs de guidage flottants assurent eux-mêmes cette fonction, pendant toute la durée de l'opération.

Le procédé de guidage peut être mis en oeuvre dans le cas d'un câble électrique destiné à être déposé sur un fond en milieu aquatique depuis un bateau câblier, ou une station offshore, jusqu'à la terre. Le procédé de guidage peut être mis en oeuvre dans le cas d'un câble électrique destiné à être déposé sur un fond en milieu aquatique depuis la terre jusqu'à un bateau câblier, ou une station offshore.

### Brève description des dessins

D'autres caractéristiques, détails et avantages apparaîtront à la lecture de la description détaillée ci-après, et à l'analyse des dessins annexés, sur lesquels :
[Fig. 1] montre de manière schématique et en perspective, en vue de dessus, un exemple de dispositif de guidage flottant.
[Fig. 2] est une vue de dessus schématique du dispositif de guidage flottant de la figure 1.
[Fig. 3] est une vue de côté schématique du dispositif de guidage flottant de la figure 1.
[Fig. 4] montre de manière schématique, en perspective et en vue de dessous, le dispositif de guidage flottant de la figure 1.
[Fig. 5] est une vue de côté schématique d'un exemple de dispositif de guidage flottant installé sur l'eau et ancré.
[Fig. 6] montre en vue de dessus schématique le dispositif de guidage flottant de la figure 5.
[Fig. 7] est une vue schématique de côté d'une installation de guidage selon un exemple.
[Fig. 8] est une vue en schéma bloc d'un exemple de procédé de guidage.
[Fig. 9] est une vue schématique selon l'axe latéral d'un autre exemple de dispositif de guidage flottant.
[Fig. 10] est une vue schématique selon l'axe longitudinal du dispositif de guidage flottant de la figure 9.
[Fig. 11] représente de manière schématique et en perspective un détail XI du dispositif de guidage flottant de la figure 9.
[Fig. 12] représente de manière schématique et en perspective un détail XII du dispositif de guidage flottant de la figure 11.
[Fig. 13] représente partiellement de manière schématique et en perspective un exemple de dispositif de guidage flottant.
[Fig. 14] représente de manière schématique et en vue de dessus un exemple de dispositif de guidage flottant.

### Description des modes de réalisation

Sur les différentes figures, les mêmes références désignent des éléments identiques ou similaires. À fin de concision, seuls les éléments qui sont utiles à la compréhension de l'exemple décrit sont représentés sur les figures et sont décrits de manière détaillée dans la suite.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieure », « inférieur », etc., ou à des qualificatifs d'orientation, tels que « horizontale », « vertical », etc., il est fait référence, sauf précision contraire, à l'orientation des figures ou d'un dispositif de guidage flottant dans sa position d'utilisation lorsqu'il flotte.

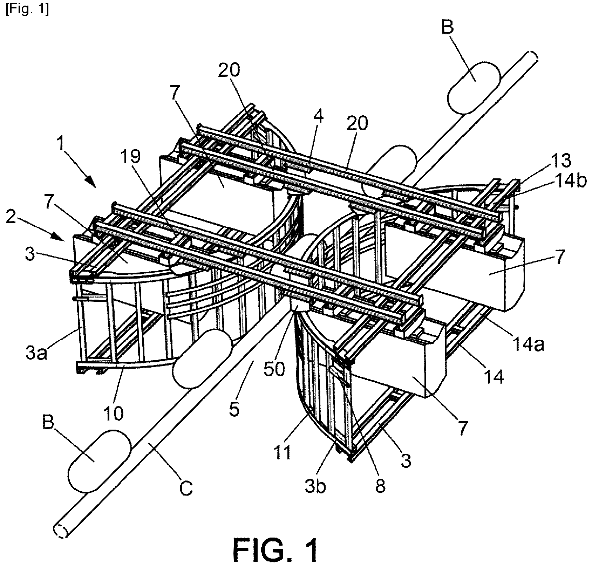

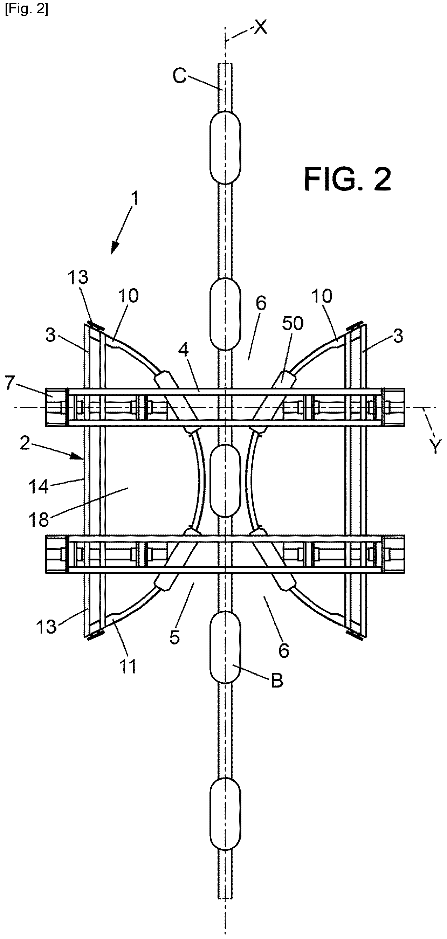

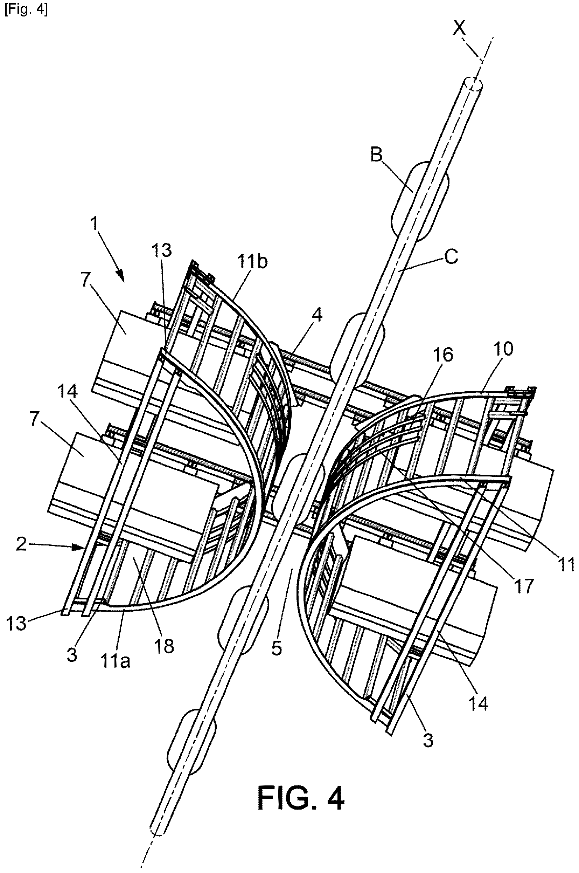

Il est maintenant fait référence aux figures 1 à 4 qui représentent un dispositif de guidage flottant 1, configuré pour être ancré sur un fond en milieu aquatique et pour guider et retenir, avant son atterrage, un câble électrique C muni de bouées de flottaison B. Pour davantage de clarté, le câble électrique C et les bouées de flottaison B ont été représentés partiellement et schématiquement sur ces figures 1, 2, 3 et 4 comme si le dispositif de guidage flottant 1 était en flottaison sur l'eau, notamment une mer ou un océan, ce qui n'est cependant pas le cas sur ces figures. Le dispositif de guidage flottant 1 comporte une structure métallique 2 comportant deux demi-structures 3, notées 3a et 3b, d'une hauteur h au moins égale à une hauteur prédéterminée, dans cet exemple au moins égal à 2 m, et une structure de liaison 4 reliant les deux demi-structures 3.

La structure métallique 2 peut comporter au moins un matériau métallique choisi dans le groupe constitué par : un acier inoxydable, un acier, un aluminium. Elle peut être traitée en surface ou non, être peinte au moins partiellement, c'est-à-dire partiellement ou entièrement, notamment être revêtue d'une peinture anticorrosion.

Le dispositif de guidage flottant 1 comporte une zone de guidage 5 du câble électrique C formant un espace comportant deux ouvertures 6 opposées pour le passage du câble électrique C, comme visible. Cet espace définissant la zone de guidage 5 est délimité latéralement par les deux demi-structures 3. Comme visible, le câble électrique C est guidé selon un axe de guidage dit axe longitudinal X.

La zone de guidage est configurée dans cet exemple de telle sorte que le câble électrique C s'étendant sensiblement selon l'axe longitudinal X, horizontal, puisse être guidé au moins partiellement selon un axe transversal Y sensiblement orthogonal à l'axe longitudinal X et selon un axe vertical Z qui leur est orthogonal. On comprend que le câble électrique C peut avoir un rayon de courbure tel qu'il s'étend selon un axe incurvé et non rectiligne, au gré des courants marins. Cependant, au niveau d'un dispositif de guidage flottant 1, ce rayon de courbure peut être peu perceptible.

Dans cet exemple, les deux demi-structures 3a et 3b sont similaires, en particulier identiques, étant disposées symétriquement autour de la zone de guidage 5, comme illustré, autour d'un plan médian vertical défini par les axes longitudinal X et vertical Z.

Toujours dans cet exemple, chaque demi-structure 3 présente une forme de demi-lune comportant une partie incurvée 10 configurée pour délimiter l'espace de la zone de guidage 5. La partie incurvée 10 comporte dans cet exemple deux barres incurvées 11, à savoir une barre incurvée inférieure 11a et une barre incurvée supérieure 11b reliées entre elles par une pluralité de barreaux verticaux 12. Le rayon de courbure des barres incurvées 11 est avantageusement identique et peut être compris entre 2 m et 5 m environ, par exemple égal à 3 m, ce rayon étant dépendant des caractéristiques du câble. Au moins une barre de consolidation 14, notamment horizontale, de chaque demi-structure 3 relie entre elles les extrémités 13 de chaque barre incurvée 11. Dans l'exemple illustré, chaque demi-structure 3 comporte quatre barres de consolidation 14, à savoir deux barres de consolidation inférieure 14a et deux barres de consolidation supérieure 14b. Les barres incurvées 11, les barreaux verticaux 12 et les barres de consolidation 14 sont fixés entre eux par soudage ou par fixation mécanique, par exemple par boulonnage, de préférence par soudage. Des éléments intermédiaires peuvent être utilisés pour la fixation, étant par exemple intercalés entre les barres ou barreaux à relier.

Dans l'exemple illustré sur les figures 1 à 4, le dispositif de guidage flottant 1 comporte un accessoire facilitateur de passage de câble 16, comportant un maillage de barres métalliques 17, dans cet exemple incurvées, fixé sur des parties des demi-structures qui délimitent la zone de guidage, dans cet exemple sur les barreaux verticaux 12. On compte dans cet exemple trois barres métalliques 17 disposées horizontalement et parallèlement entre elles. Un tel accessoire facilitateur de passage de câble 16 peut permettre d'éviter que les demi-structures 3, notamment les barreaux verticaux 12, n'accrochent les bouées de flottaison B lorsque le câble électrique C est guidé dans la zone de guidage et de retenue 5. Un tel accessoire facilitateur peut être réalisé dans un matériau à faible coefficient de frottement et/ou peut comporter un système de roulement.

Le dispositif de guidage flottant 1 comporte encore au moins deux flotteurs 7 configurés pour assurer la flottaison du dispositif de guidage flottant 1, dans cet exemple quatre flotteurs 7.

Dans cet exemple, les flotteurs 7 présentent une forme sensiblement parallélépipédique, allongée parallèlement à l'axe transversal Y. Chaque flotteur 7 est partiellement logé dans un espace intérieur 18 de chaque demi-structure 3, l'espace intérieur 18 étant délimité latéralement, dans cet exemple, par les parties incurvées 10 et les barres de consolidation 14. Néanmoins, toujours dans cet exemple, les flotteurs 7 dépassent de cet espace intérieur 18, du côté opposé à la zone de guidage 5, dans cet exemple à l'extérieur des barres de consolidation 14. Les flotteurs 7 sont bien entendu dimensionnés de manière à permettre une flottaison du dispositif de guidage flottant 1. Le dispositif de guidage flottant 1 comporte, pour chaque flotteur, un support de flotteur 19 fixé à la structure métallique 2, de telle sorte que chaque flotteur 7 s'étende dans l'espace intérieur 18 au sein d'une demi-structure 3a ou 3b. Les supports de flotteurs 19 sont fixés à la structure métallique 2, dans cet exemple à la structure de liaison 4.

La distance minimale d entre les deux demi-structures peut être inférieure à 1m, étant par exemple comprise entre 0,5m et 1m.

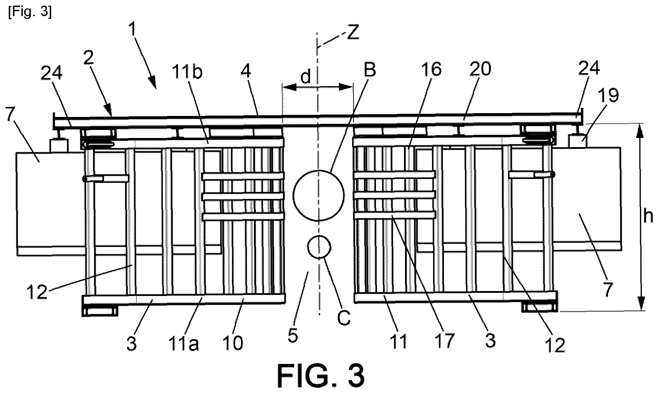

La structure de liaison 4 comporte au moins une barre transversale 20, dans cet exemple une pluralité de barres transversales 20 s'étendant parallèlement à l'axe transversal Y, au nombre de quatre dans cet exemple, reliant les deux demi-structures 3a et 3b dans une partie supérieure de celles-ci, dans cet exemple au-dessus de celles-ci. Dans cet exemple, les barres transversales 20 sont disposées deux à deux au-dessus d'une paire de flotteurs 7 disposés chacun dans une demi-structure 3 et alignés entre eux parallèlement à l'axe transversal Y. Les barres transversales 20 dépassent, par leurs extrémités 24, des demi-structures 3, dans cet exemple et comme visible sur la figure 3 notamment, pour se positionner au-dessus des flotteurs 7 dans une zone de fixation de ceux-ci aux barres transversales 20 à l'aide de supports de flotteurs 19.

Dans cet exemple, la zone de guidage 5 est uniquement délimitée latéralement par les demi-structures 3 et supérieurement par la ou une des barres transversales 20.

Le dispositif de guidage flottant 1 comporte au moins un point d'amarrage 8 fixé à la structure métallique 2, configuré pour permettre de fixer au moins une ligne de mouillage, cette dernière étant prévue pour être reliée à un ancrage sur le fond en milieu aquatique, comme cela sera détaillé plus loin. Le point d'amarrage 8 peut bien entendu être formé par au moins un élément de la structure métallique 2, par exemple une des barres ou barreaux décrits plus haut.

La structure métallique 2 est une structure ouverte, c'est-à-dire apte à laisser circuler l'eau au sein de la structure métallique 2 lorsque le dispositif de guidage flottant 1 est sur l'eau.

Dans un exemple, la structure de liaison 4 est fixée de manière amovible sur les demi-structures 3 afin de faciliter le transport. En effet, dans un tel cas, les demi-structures 3 peuvent être empilées lors du transport pour un gain de place et ensuite, sur place, être assemblées avec la structure de liaison 4, notamment par boulonnage ou par soudage. Après l'utilisation du dispositif de guidage flottant 1, celui-ci peut être démonté en enlevant la structure de liaison 4 puis en superposant les demi-structures 3 pour gagner de la place. Des plaques 50 peuvent être intercalées entre chaque demi-structure 3, notamment la barre incurvée supérieure 11b, et la ou les barres transversales 20 pour permettre la fixation notamment mécanique.

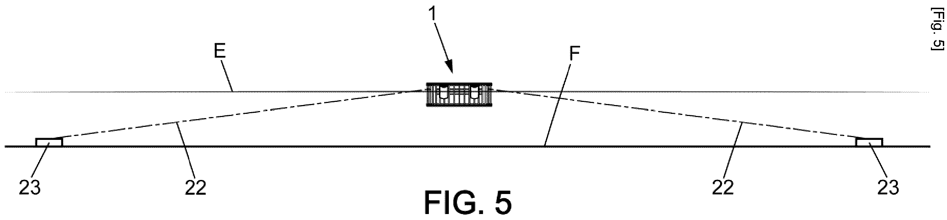

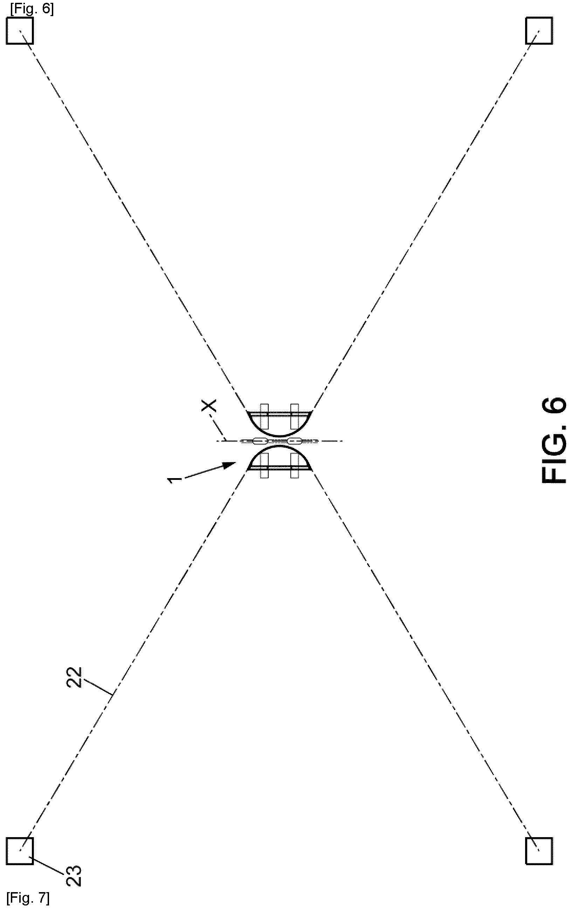

On a illustré sur les figures 5 et 6 un exemple de dispositif de guidage flottant 1 installé sur l'eau, notamment sur la mer ou l'océan, à une distance inférieure ou égale à 3km, notamment inférieure ou égale à 1 km, par exemple inférieure ou égale à 800m de la côte terrestre. Une ligne de mouillage 22 a été fixée au point d'amarrage 8 d'une part et d'autre part à un ancrage 23, notamment à un bloc de béton, par exemple de plusieurs tonnes, notamment d'environ 8T, posé sur le fond en milieu aquatique F. L'ancrage 23 peut en variante comporter une ancre à vis plantée dans le fond en milieu aquatique. Dans cet exemple, le nombre de lignes de mouillage 22 est de quatre. Le nombre de points d'amarrage 8 peut être égal au nombre de lignes de mouillage 22, de même que le nombre d'ancrage 23, c'est-à-dire quatre dans cet exemple. On voit sur la figure 5 le niveau de l'eau E, avec le dispositif de guidage flottant 1 qui flotte.

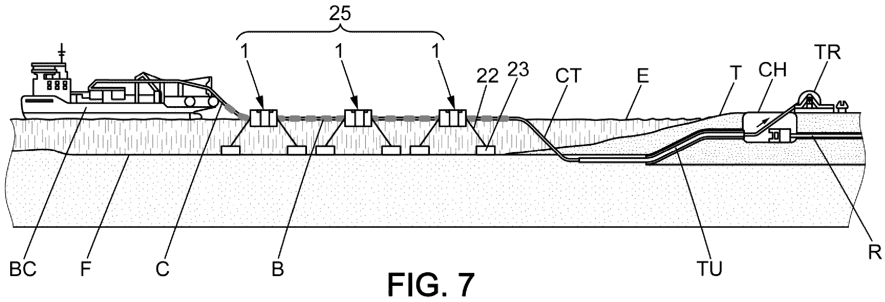

On a représenté sur la figure 7 une installation 25 comportant une pluralité de dispositifs de guidage flottants 1 ancrés au sol marin, les dispositifs de guidage flottants 1 étant configurés pour retenir, dans la zone de guidage 5, un câble électrique C muni de bouées de flottaison B. Une telle installation 25 comporte une pluralité de dispositifs de guidage flottants 1 tels que décrits plus haut, disposés, à distance prédéterminée deux à deux par exemple à une distance comprise entre 50m et 150m, de telle sorte que les ouvertures 6 des zones de guidage 5 permettent le passage du câble électrique C dans toutes les zones de guidage 5. L'installation 25 comporte encore au moins une ligne de mouillage 22 et un ancrage 23 de fond en milieu aquatique pour chaque dispositif de guidage flottant 1, notamment au moins deux, voire quatre, lignes de mouillage 22 reliées chacune à un ancrage 23. Le niveau d'eau à marée basse dans la zone d'installation des dispositifs de guidage flottant 1 peut être comprise entre 2 et 3 m, mais il peut être supérieur ou inférieur, le dispositif de guidage 1 pouvant se poser sur le sol F avant le câble électrique C, évitant ainsi le coincement de celui-ci sous le dispositif de guidage 1. La hauteur potentielle d'eau n'est pas limitée, étant strictement supérieure à 0m. Le dispositif de guidage flottant est avantageusement adapté pour un marnage jusqu'à 15 m et pour toutes les hauteurs d'eau.

Les distances entre les dispositifs de guidage flottants 1 peuvent varier entre elles, notamment en fonction des courants marins. De même l'orientation des dispositifs de guidage flottants 1 ne reste pas inchangée lors de la mise en place du câble électrique C à cause des vents, des courants marins etc.

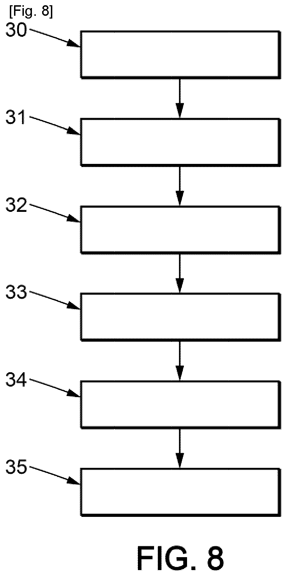

La figure 8, avec le visuel apporté par la figure 7, illustre les étapes d'un procédé de guidage d'un câble électrique C muni de bouées de flottaison B, avant son atterrage sur un fond en milieu aquatique F, depuis un bateau câblier BC jusqu'à la côte terrestre T mettant en oeuvre une installation 25 ainsi qu'un treuil TR disposé sur la terre T. Le treuil TR comporte au départ un câble de travail CT enroulé. Le procédé comporte les étapes suivantes.

On commence, dans une étape 30, par la mise en place de l'installation 25, c'est-à-dire par la mise en place des dispositifs de guidage flottants 1 sur l'eau, notamment la mer ou l'océan, et par l'ancrage de chaque dispositif de guidage flottant 1.

On procède au déroulement du câble de travail CT depuis le treuil TR, dans une étape 31.

Dans une étape 32, qui peut être partiellement simultanée à l'étape 31, le passage du câble de travail TR dans les zones de guidage 5 des dispositifs de guidage flottants 1 successifs est effectué, par exemple à l'aide d'un bateau, puis on réalise, dans une étape 33, l'accrochage du câble de travail CT au câble électrique C porté par le bateau câblier BC, le câble électrique C étant muni de bouées de flottaison B.

Une fois les deux câbles CT et C attachés entre eux, on procède, dans une étape 34, à l'enroulement sur le treuil TR de ce câble de travail CT de manière à déployer le câble électrique C dans l'eau en le faisant passer par les zones de guidage 5. C'est cette étape qui est illustrée schématiquement sur la figure 7. En effet, on voit le déroulement du câble électrique C muni des bouées de flottaison B depuis le bateau câblier BC derrière le câble de travail CT, à l'aide du treuil TR.

Il est à noter qu'à l'approche de la côte terrestre T, comme visible sur la figure 7, le câble CT puis le câble électrique C sont passés, par exemple à l'aide de plongeurs marins, dans un tunnel souterrain TU pour arriver jusqu'au treuil TR. Pour cette phase, les bouées de flottaison B du câble électrique C sont enlevées à l'aide de bateaux et/ou de plongeurs marins pour mettre le coulage du câble électrique C vers l'entrée du tunnel TU. Une chambre CH de connexion au réseau électrique R est prévue à proximité du treuil TR pour brancher le câble électrique C au réseau électrique R.

Enfin, dans une étape 35, on peut effectuer l'enlèvement des bouées de flottaison B du câble électrique C de manière à le déposer sur le fond en milieu aquatique F, puisqu'il ne flotte plus, cette étape pouvant être faite à l'aide de bateaux et/ou de plongeurs marins.

Une fois le procédé mis en oeuvre, on peut retirer de la mer ou de l'océan les dispositifs de guidage flottants 1 et leurs ancrages 23 et lignes de mouillage 22. Seul le câble électrique C demeure.

Le câble électrique C pourra ultérieurement être enterré dans le fond en milieu aquatique, notamment à moins d'un mètre de profondeur sous le fond en milieu aquatique F.

Le cas échéant, on peut démonter la structure de liaison 4 des demi-structures 3 dans le but de les transporter et/ou stocker par exemple pour un usage ultérieur. En particulier dans ce cas, une étape préalable à l'étape 30 de montage des dispositifs de guidage flottant 1 par assemblage et fixation des demi-structures 3 à la structure de liaison 4 peut être mise en oeuvre.

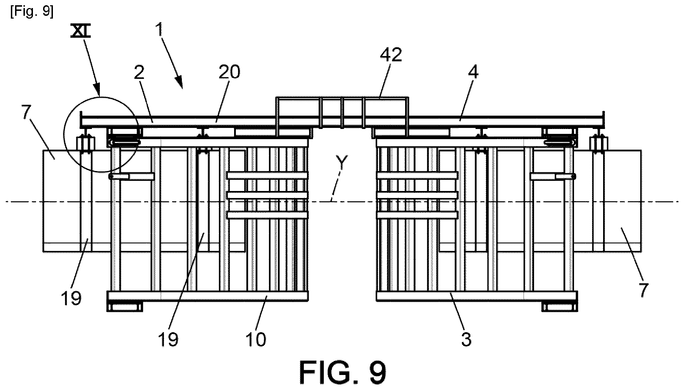

Bien entendu, la présente divulgation n'est pas limitée aux exemples qui viennent d'être décrits. On a en particulier représenté sur les figures 9 à 13 d'autres exemples de dispositif de guidage flottant 1.

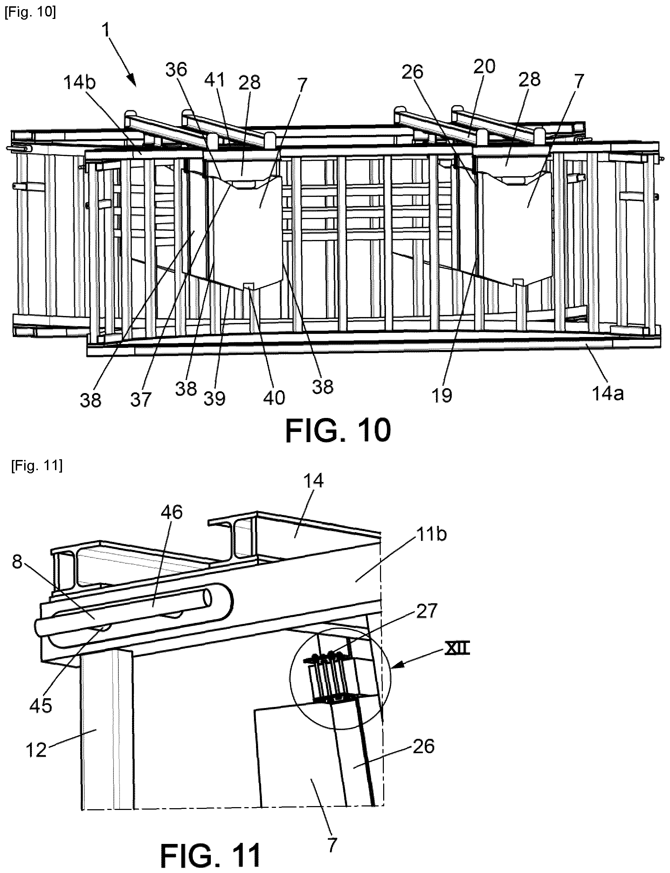

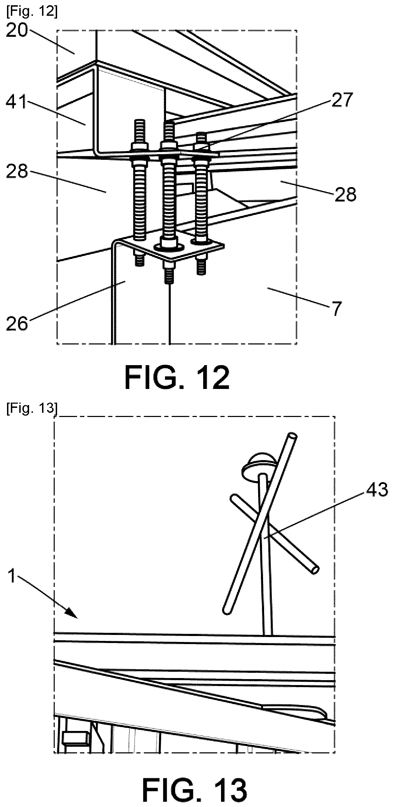

Comme visible sur les figures 9 et 10, les supports de flotteurs 19 comportent au moins une sangle métallique 26 de fer plat entourant le flotteur 7 et fixée à au moins une des barres transversales 20. La fixation de cette sangle métallique 26 se fait à l'aide d'une bride de fixation 27 comme illustré sur la figure 12. On note que la bride de fixation 27 est formée par des boulons et des pattes de fixation dont l'une est formée par l'extrémité pliée de la sangle métallique 26 et l'autre une extrémité métallique d'un barreau de fixation 41 disposé sur le flotteur 7 et sous la barre transversale 20, perpendiculairement à celle-ci.

Des blocs 28, jouant le rôle de calage du flotteur 7, peuvent être intercalés entre les flotteurs 7 et la ou les barres transversales 20, comme on peut le voir notamment sur les figures 10 et 12. De tels blocs 28 sont de préférence réalisés en bois, de manière à être plus faciles à reprendre qu'une pièce métallique si besoin de modification. Cependant, les blocs 28 peuvent être alternativement réalisés en métal. Le rôle des blocs 28 peut être expliqué comme suit. Le rôle du flotteur 7 est de permettre de maîtriser l'enfoncement du dispositif de guidage flottant 1 dans l'eau selon le flotteur 7 employé. Par exemple, si le flotteur 7 a une autre dimension ou forme, la flottaison est modifiée, de telle sorte que l'enfoncement du dispositif de guidage flottant 1 est modifié. Ainsi, il y a nécessité de recaler le flotteur 7 et la cale en bois formant le bloc 28 est un moyen de calage simple et économique.

La forme des flotteurs 7 peut varier. Elle peut être parallélépipédique, par exemple de section carrée ou hexagonale. En variante, elle peut être non totalement parallélépipédique, étant par exemple de section ronde. En particulier, dans l'exemple des figures 9 et 10, la paroi supérieure 36 des flotteurs 7 forme un creux dont le fond 37 s'étend parallèlement à l'axe latéral Y et aux parois latérales 38 du flotteur 7. La paroi inférieure 39 des flotteurs 7 forme un relief vers le bas dont l'extrémité 40 s'étend parallèlement à l'axe latéral Y.

Dans l'exemple de la figure 9, l'accessoire facilitateur de passage de câble 16 comporte, sous la structure de liaison 4, dans cet exemple sous la ou les barre(s) transversale(s) 20, une grille 42 incurvée vers le haut et recouvrant inférieurement la ou les barres transversales 20.

La figure 11 montre de manière détaillée un exemple de point d'amarrage 8 pouvant être prévu sur un dispositif de guidage flottant 1, comportant une base 45 formée d'un socle soudé à la barre incurvée supérieure 11b et de deux piliers perpendiculaires au socle et une patte 46 de section circulaire fixée aux piliers et parallèles au socle. D'autres points d'amarrage 8 peuvent bien entendu être envisagés, en particulier un anneau d'amarrage. Par ailleurs, une chaîne de sécurité peut être prévue sur la ligne de mouillage 22, en dérivation, laquelle chaîne de sécurité peut être apte à être amarrée sur un autre point d'amarrage, par exemple une patte, fixé sur une des demi-structures 3.

On a représenté sur la figure 13 un exemple d'accessoire fixé en partie supérieure du dispositif de guidage flottant, utile pour la navigation, telle qu'une croix de saint André intégrant une lumière 43, signalant par exemple l'intervention de plongeurs et obligeant les bateaux à s'éloigner de la zone.

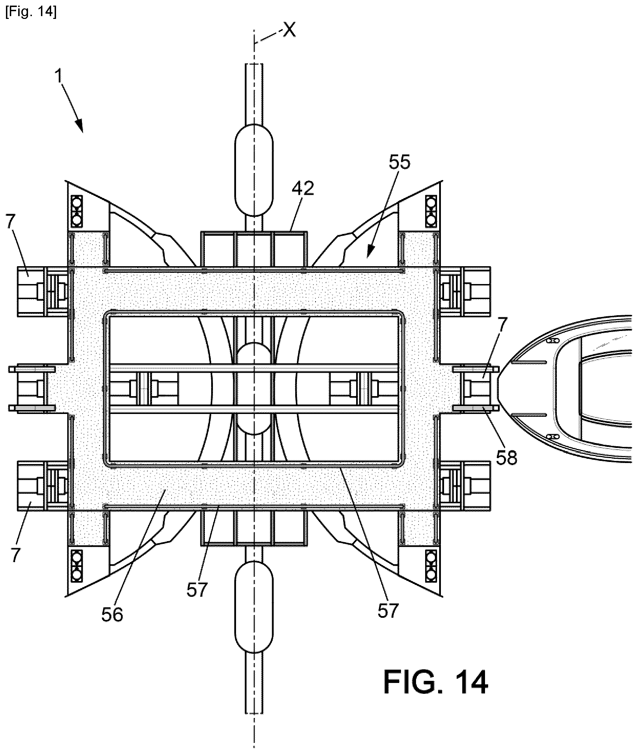

Le dispositif de guidage flottant 1 peut, dans un autre exemple illustré sur la figure 14, comporter un système d'accès 55 pour un personnel comportant dans cet exemple une passerelle 56, un garde-corps 57, un accès 58 à partir d'un bateau. Un tel système d'accès 55 pourrait encore comporter une échelle, un caillebotis, une prise de main, une corde. On voit également sur cette figure que le nombre de flotteurs 7 est de six, c'est-à-dire trois de chaque côté. L'accès 58 se trouve au niveau du ou de chaque flotteur 7 situé au milieu entre deux autres flotteurs 7, dans cet exemple, à équidistance de chacun d'eux.

La passerelle 56 peut présenter une forme de O comme dans l'exemple illustré, ou encore une forme de I, avec une seule passerelle au milieu et non deux sur les bords, par exemple pour alléger le dispositif de guidage flottant 1.

Le dimensionnement du dispositif de guidage flottant 1 est bien sûr adapté à un projet donné et un site donné. Un tel dimensionnement est lié aux efforts environnementaux, tels que le courant, la houle, le vent, mais est également lié au diamètre du câble électrique et des bouées de flottaison, au niveau d'eau à marée haute et marée basse, aux efforts internes du câble électrique du fait de l'opération de mise en place.

## Revendications

1. Dispositif de guidage flottant (1), configuré pour être ancré sur un fond en milieu aquatique (F) et pour guider et retenir, avant son atterrage, un câble électrique (C) muni de bouées de flottaison (B), le dispositif de guidage flottant (1) comportant :
i. une structure métallique (2) comportant deux demi-structures (3) d'une hauteur (h) au moins égale à une hauteur prédéterminée, et une structure de liaison (4) reliant les deux demi-structures (3, 3a, 3b),
ii. une zone de guidage (5) du câble électrique (C) formant un espace comportant deux ouvertures (6) opposées pour le passage du câble électrique (C), ledit espace étant délimité latéralement par les deux demi-structures (3, 3a, ; 3b),
iii. au moins deux flotteurs (7) configurés pour assurer la flottaison du dispositif de guidage flottant (1),
iv. au moins un point d'amarrage (8) fixé à la structure métallique (2), configuré pour permettre de fixer au moins une ligne de mouillage (22), cette dernière étant prévue pour être reliée à un ancrage (23) sur le fond en milieu aquatique (F).

2. Dispositif de guidage flottant (1) selon la revendication 1, dans lequel les deux demi-structures (3, 3a, 3b) sont similaires, notamment identiques, étant disposées symétriquement autour de la zone de guidage (5).

3. Dispositif de guidage flottant (1) selon la revendication 1 ou 2, chaque demi-structure (3, 3a, 3b) présentant une forme de demi-lune comportant une partie incurvée (10) configurée pour délimiter latéralement l'espace de la zone de guidage (5).

4. Dispositif de guidage flottant (1) selon l'une quelconque des revendications précédentes, dans lequel la structure de liaison (4) comporte au moins une barre transversale (20) reliant les deux demi-structures (3, 3a, 3b).

5. Dispositif de guidage flottant (1) selon l'une quelconque des revendications précédentes, comportant, pour chaque flotteur (7), un support de flotteur (19) fixé à la structure métallique (2), notamment à la structure de liaison (4), de telle sorte que chaque flotteur (7) s'étende dans un espace intérieur (18) de chaque demi-structure (3, 3a, 3b).

6. Dispositif de guidage flottant (1) selon l'une quelconque des revendications précédentes, dans lequel la zone de guidage (5) est configurée de telle sorte que le câble électrique (C) s'étendant sensiblement selon un axe longitudinal (X) puisse être guidé au moins partiellement selon un axe transversal (Y) perpendiculaire à l'axe longitudinal (X) et selon un axe vertical (Z).

7. Dispositif de guidage flottant (1) selon la revendication 4, dans lequel la zone de guidage (5) est uniquement délimitée latéralement par les demi-structures (3, 3a, 3b) et supérieurement par la barre transversale (20).

8. Dispositif de guidage flottant (1) selon l'une quelconque des revendications précédentes, la structure de liaison (4) étant fixée de manière amovible aux demi-structures (3, 3a, 3b).

9. Dispositif de guidage flottant (1) selon l'une quelconque des revendications précédentes, comportant un système d'accès pour un personnel comportant au moins l'un parmi : une passerelle, une échelle, un garde-corps, un caillebotis, un accès à partir d'un bateau, une prise de main et une corde.

10. Dispositif de guidage flottant (1) selon l'une quelconque des revendications précédentes, comportant un accessoire facilitateur de passage de câble (16), comportant un maillage de barres métalliques (17) fixé sur des parties des demi-structures (3, 3a, 3b) qui délimitent la zone de guidage (5), ou un matériau à bas coefficient de frottement ou comportant un système de roulement.

11. Installation (25) de guidage d'un câble électrique (C) muni de bouées de flottaison (B) avant son atterrage, l'installation comportant
i. une pluralité de dispositifs de guidage flottants (1) selon l'une quelconque des revendications précédentes, disposés, notamment à distance prédéterminée deux à deux, de telle sorte que les ouvertures (6) des zones de guidage (5) permettent le passage du câble électrique dans toutes les zones de guidage (5),
ii. au moins une ligne de mouillage (22) et un ancrage (23) de fond en milieu aquatique pour chaque dispositif de guidage flottant (1), notamment au moins deux lignes de mouillage (22) reliées chacune à un ancrage (23).

12. Procédé de guidage d'un câble électrique (C) pour un maintien du câble électrique (C) sur sa trajectoire en phase provisoire de chantier, notamment un câble électrique destiné à être déposé sur un fond en milieu aquatique entre un bateau câblier (BC), ou une station offshore, et la terre, mettant en oeuvre une installation selon la revendication 11 ainsi qu'un treuil (TR) disposé sur la terre, le procédé comportant :
a. la mise en place de ladite pluralité de dispositifs de guidage flottants (1) sur l'eau et l'ancrage de chaque dispositif de guidage flottant (1), à l'aide de ladite au moins une ligne de mouillage (22) et dudit ancrage (23),
b. le déroulement d'un câble de travail (CT) depuis le treuil (TR),
c. le passage du câble de travail (CT) dans les zones de guidage (5) des dispositifs de guidage flottants (1) successifs puis
d. l'accrochage du câble de travail (CT) au câble électrique (C) porté par le bateau câblier (BC), ou la station offshore, le câble électrique (C) étant muni de bouées de flottaison (B), l'enroulement sur le treuil (TR) du câble de travail (CT) de manière à déployer le câble électrique (C) dans l'eau en le faisant passer par les zones de guidage.
